# EUROPÄISCHE PATENTSCHRIFT

(11) **EP 0 929 420 B1**
(45) Veröffentlichungstag und Bekanntmachung des Hinweises auf die Patenterteilung: **16.04.2003**
(21) Anmeldenummer: 98948690.7
(22) Anmeldetag: 30.07.1998
(51) Int. Cl.: B60R 22/20

(54) **HÖHENVERSTELLER FÜR UMLENKBESCHLÄGE VON FAHRZEUG-SICHERHEITSGURTEN**
HEIGHT ADJUSTMENT MEANS FOR SAFETY BELT DEFLECTOR FITTINGS OF VEHICLES
SYSTEME D'AJUSTEMENT EN HAUTEUR POUR GARNITURES DE RENVOI DE CEINTURES DE SECURITE DE VEHICULES

(30) Priorität: 31.07.1997 DE 29713642 U
(43) Veröffentlichungstag der Anmeldung: 21.07.1999
(73) Patentinhaber: Griesemer, Albert, 57462 Olpe-Biggesee (DE)
(72) Erfinder: GRIESEMER, Albert, D-57462 Olpe-Biggesee (DE); KREIM, Else, D-64572 Büttelborn (DE)
(74) Vertreter: Grommes, Karl F., Dr.
(86) Internationale Anmeldenummer: DE9802177
(87) Internationale Veröffentlichungsnummer: WO99006247

(56) Entgegenhaltungen:
- EP-A- 0 376 320
- DE-A- 3 225 862
- DE-A- 3 431 678
- DE-U- 8 530 629
- DE-U- 29 701 481
- US-A- 4 569 537

## Beschreibung

### Technisches Gebiet

Die Erfindung betrifft einen Höhenversteller für Umlenkbeschläge von Fahrzeug-Sicherheitsgurten gemäß dem Oberbegriff von Anspruch 1.

### Stand der Technik

Ein derartiger gattungsgemäßer Höhenversteller ist durch die DE-A-32 25 862 bekannt. Jenes Dokument behandelt das Problem einer ungewollten Entriegelung, insbesondere bei hohen Fahrzeugquerbeschteunigungen, wie sie beispielsweise bei einem Seitenaufprall auftreten können. Abhilfe wird darin gesucht, daß die für eine Entriegelung zu bewegenden Teile eine möglichst geringe Masse haben sollten. Außerdem sollten diese Teile auch einfach und kostengünstig herstellbar sein.

Wenngleich dies die richtigen Ansätze sind, werden dem Fachmann mit jenem Dokument tatsächlich erst wenig effiziente Lösungen vermittelt. So sind die vorgeschlagenen Ausführungsformen eines Sperrteils (oder Rastgliedes gemäß dortiger Bezeichnung) in Wirklichkeit noch recht aufwändig. Sie umfassen noch recht komplizierte Bauteile und besitzen damit nicht nur eine relativ hohe Masse, sondern auch eine relativ hohe Beweglichkeit. Das alles stellt aber noch keine befriedigende Lösung für die Praxis dar.

Es ist auch bereits ein einfacher ausgebildetes Rastglied oder Sperrteil mit der DE-U-297 01 481 angeregt worden. Dieser vom Anmelder stammende Vorschlag gilt jedoch nur in Verbindung mit einer anders gestalteten Führungsschiene, nämlich mit einem etwa C-förmigen Querschnitt. Auf eine im Querschnitt U-förmige Führungsschiene ist er dagegen nicht anwendbar, so daß dafür die bekannten Sicherheitsdefizite fortbestehen.

### Darstellung der Erfindung

Hier setzt nun die Erfindung an. Sie möchte einen Höhenversteller der eingangs genannten Art dahingehend weiterentwickeln, daß er auch im Falle eines Seitencrashs sicher die gewählte Rastposition aufrechterhält.

Gelöst wird diese Aufgabe mit den kennzeichnenden Merkmalen des Anspruchs 1. Zweckmäßige Weiterbildungen sind in den Unteransprüchen angegeben.

Wie ersichtlich, bleibt das eigentliche Verstellteil in seiner Beweglichkeit so eingeschränkt, daß es nur längs verschoben werden kann. Zum Ein- und Ausrasten besitzt lediglich ein einfaches und leichtes Sperrteil, welches vom Verstellteil in Längsrichtung mitgenommen wird, eine zusätzliche Beweglichkeit, nämlich senkrecht zur Bewegungsrichtung des Verstellteils. Dadurch kann das Sperrteil zum Arretieren direkt in die Rastöffnungen eingreifen und auch daraus wieder gelöst werden, wobei es nur geringer Wegstrecken bedarf, nämlich in der Größenordnung der Tiefe der Rastöffnungen, was gleichbedeutend ist mit der Materialstärke der Führungsschiene. Risikomindemd wirkt sich dabei auch die geringe Masse (unter 10g) des verhältnismäßig einfachen Sperrteils aus.

Im Ergebnis ist für den Fall eines Seitencrashs eine hohe Blockiersicherheit gegeben. Weitere vorteilhafte Ausgestaltungen bezüglich der Sicherheit geben die Unteransprüche an. Mit den zusätzlichen Merkmalen lassen sich außerdem die Gleitfähigkeit verbessern, Geräusche vermindern und bequeme Montageeinheiten (Module) schaffen, wie auch sonstigen Gefahren begegnen, insbesondere ernstzunehmenden Verletzungsgefahren im Falle eines Kopfaufpralls.

### Kurze Beschreibung der Zeichnung

Weitere Einzelheiten und Vorteile werden nachstehend anhand der Zeichnung für ein bevorzugtes Ausführungsbeispiel beschrieben. Darin zeigen:
- Fig. 1: eine explosionsartige Darstellung der Einzelteile eines Höhenverstellers in perspektivischer Ansicht,
- Fig. 2: einen zusammengefügten Höhenversteller in Draufsicht,
- Fig. 3: den Höhenversteller von Fig. 2 im Längsschnitt entlang der Linie III-III,
- Fig. 4a: vereinfacht den Höhenversteller von Fig. 3 im Querschnitt entlang der Linie IV-IV, und zwar in Arretierstellung,
- Fig. 4b: denselben Gegenstand in Verschiebestellung,
- Fig. 5: eine explosionsartige Darstellung der Einzelteile eines anderen Höhenversteilers in perspektivischer Ansicht,
- Fig. 6: den zusammengefügten Höhenversteller von Fig. 5, ebenfalls in perspektivischer Ansicht,
- Fig. 7: den Höhenversteller von Fig. 6 im Längsschnitt,
- Fig. 8: den Höhenversteller von Fig. 6 in Draufsicht,
- Fig. 9a: vereinfacht den Höhenversteller von Fig. 6, auf der Höhe seines Sperrteils quer geschnitten, und zwar in Arretierstellung,
- Fig. 9b: denselben Gegenstand in Verschiebestellung und
- Fig. 10: vereinfacht den Höhenversteller von Fig. 6, auf der Höhe seiner Raststifte quer geschnitten, in Raststellung.

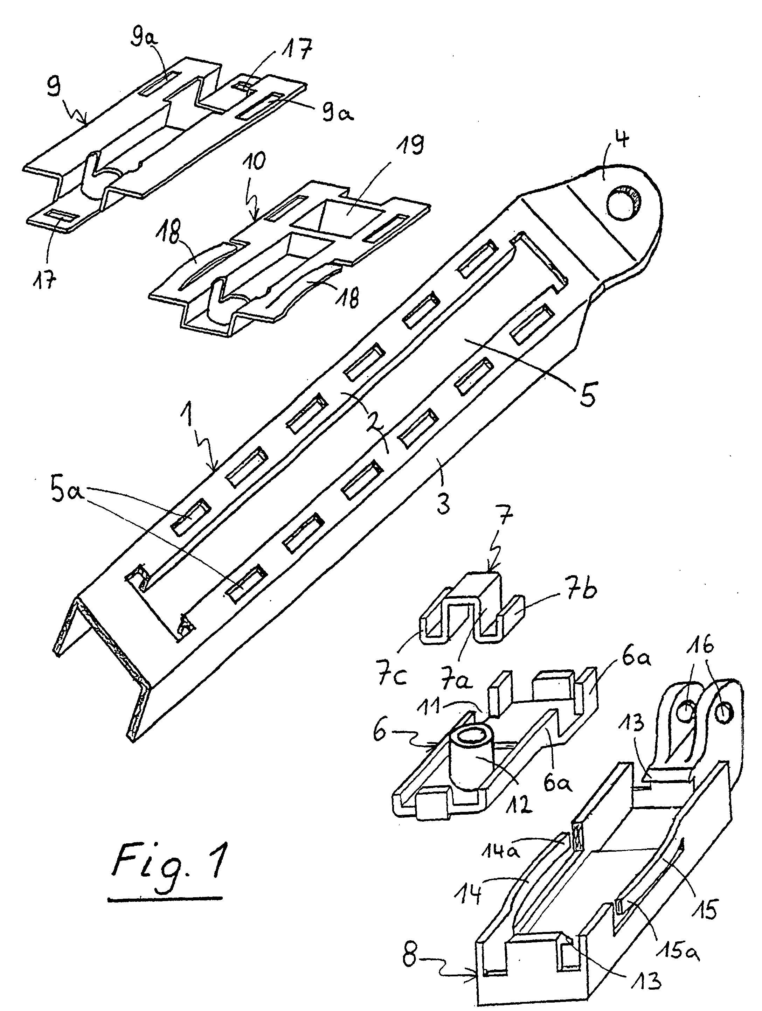

Nach Fig. 1 besteht ein erfindungsgemäßer Höhenversteller für den Umlenkbeschlag eines Sicherheitsgurtes zunächst aus einer im Querschnitt U-förmigen Führungsschiene 1 mit einem mittleren Bereich 2 und rechtwinklig davon abgehenden Schenkeln 3. Für ihre Befestigung (an der B- oder C-Säule eines Fahrzeugs) verfügt die Führungsschiene 1 über ein abgewinkeltes und mit einer Bohrung versehenes Endstück **4.** Im mittleren Bereich 2 weist sie ferner eine längliche Aussparung 5 auf sowie paarweise dazu angeordnete Rastöffnungen 5a.

Mit der Führungsschiene 1 sollen folgende weiteren Teile zusammenwirken: ein Verstellteil 6, ein Sperrteil 7, ein Kunststoffkäfig 8, welche allesamt innenliegend anzuordnen sind, sowie eine Verriegelungsplatte 9 und ein Kunststoffgleiter 10, welche außenliegend anzuordnen sind. Das Verstellteil 6 verfügt über hochgestellte Ränder 6a, insbesondere in Längsrichtung. Diese sind teilweise durchbrochen, wodurch eine Führung 11 und gleichzeitige Abstützung für das Sperrteil 7 gebildet ist. Im übrigen trägt das Verstellteil 6 eine Gewindebuchse 12 für einen (nicht gezeigten) Umlenkbeschlag. Das Sperrteil 7 ist hier als ein im Kern U-förmiger Bügel 7a ausgebildet, dessen Schenkel im Gegensinn weiter U-förmig umgebogen sind. Die freien Schenkel oder Enden 7b stellen Rastnasen dar, welche mit ihren Stirnseiten 7c in die Führung 11 des Verstellteils 6 eingepaßt sind.

Das Verstellteil 6 mitsamt dem Sperrteil 7 ist in den Kunststoffkäfig 8 einsetzbar, welcher an seinen Schmalseiten Rastnasen 13 und an seinen Längsseiten angeformte Gleitfedern 14, 15 besitzt. Letztere weisen mit ihren freien Enden 14a, 15a in entgegengesetzte Richtungen. An einer Schmalseite ist außerdem ein Lager 16 für einen Verstellhebel angeformt.

Zum Halten und Verschließen des Kunststoffkäfigs 8 dient die Verriegelungsplatte 9, welche außenliegend an der Führungsschiene 1 anzuordnen ist und der Form der Führungsschiene 1 folgt, d.h. die Verriegelungsplatte 9 verfügt über seitliche Bereiche, welche die Rastöffnungen 5a überstreichen, und einen mittleren Bereich, welcher in die längliche Aussparung 5 der Führungsschiene 1 abgesenkt ist. An letzterem finden sich Aussparungen 17 für die Rastnasen 13 des Kunststoffkäfigs 8 zur Bildung einer lösbaren Clipsverbindung.

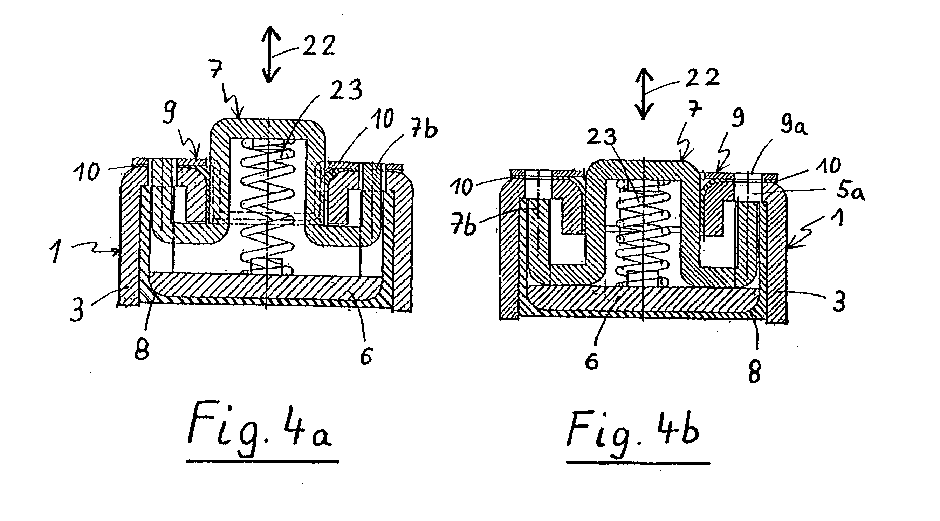

Im übrigen weist die Verriegelungsplatte 9 ein Paar Rastöffnungen 9a auf, welches in Arretierstellung deckungsgleich mit einem Paar Rastöffnungen 5a der Führungsschiene 1 ist und zusätzlich die Enden 7b des Sperrteils 7 aufnehmen kann (vgl. Fig. 4 a,b). Im übrigen ist eine entsprechende Aussparung für das Sperrteil 7 wie auch für die Gewindebuchse 12 vorgesehen.

Schließlich weist der Kunststoffgleiter 10 eine ähnliche Form (samt Aussparungen) wie die Verriegelungsplatte 9 auf. Im Unterschied dazu ist er jedoch etwas verkürzt und besitzt angeformte Gleitfedern 18, welche zwischen den seitlichen Bereichen der Verriegelungsplatte 9 und dem mittleren Bereich 2 der Führungsschiene 1 wirksam sind. Ferner ist im Bereich der Aussparung für das Sperrteil 7 ein Kanalabschnitt 19 zur besseren Führung des Sperrteils 7 vorgesehen. Sind Verriegelungsplatte 9 und Kunststorfkäfig 8 zusammengeclipst, so hält sich der Kunststoffgleiter 10 ohne weiteres dazwischen, wie auch die sonstigen beweglichen Teile sicher getragen und gehalten werden. Es entsteht gewissermaßen eine Montageeinheit oder ein Funktionsmodul.

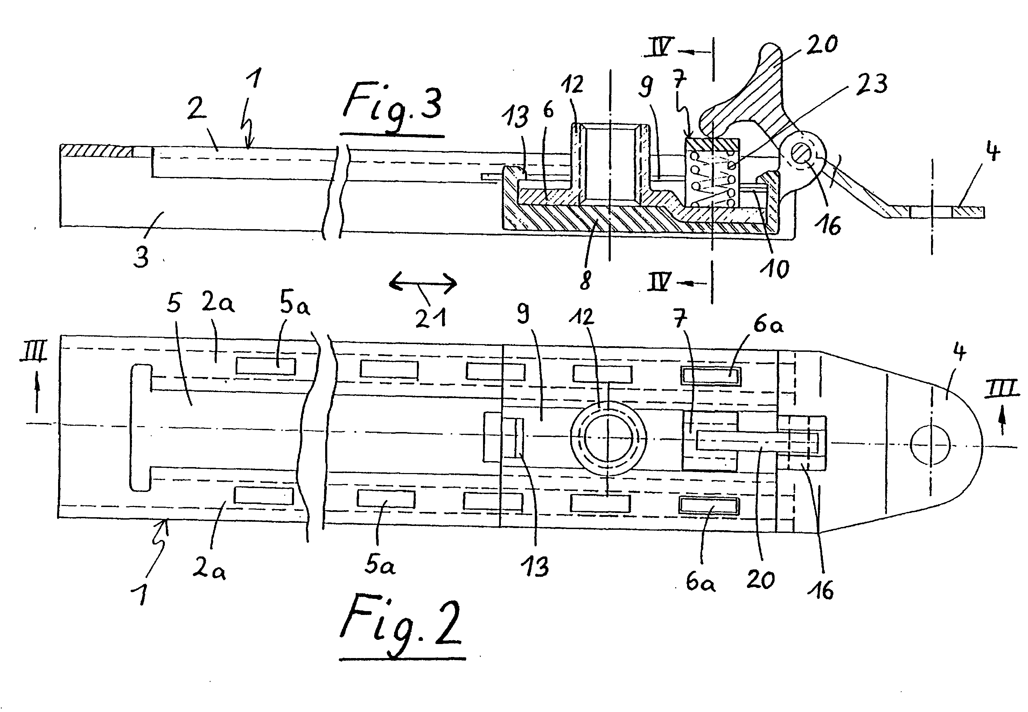

Die Figuren 2 und 3 lassen den zusammengefügten Höhenversteller erkennen, welcher hier noch mit einem Betätigungshebel, d.h. Auslöse- oder Verstellhebel 20 vervollständigt ist. Mittels dieses Hebels 20 kann von außen Druck auf das Sperrteil 7 ausgeübt und dieses aus seiner Arretierstellung gelöst werden. Die Arretierstellung ist in Fig. 4a verdeutlicht, die Verschiebestellung in Fig. 4b. Die in Betracht kommenden Bewegungsrichtungen sind mit Pfeilen 21 für das Verstellteil 6 und 22 für das Sperrteil 7 versinnbildlicht. Die in Fig. 4a wiedergegebene Arretierstellung wird mittels eines elastischen Organs aufrechterhalten, das ist hier eine zwischen Verstellteil 6 und Sperrteil 7 eingespannte Druckfeder 23.

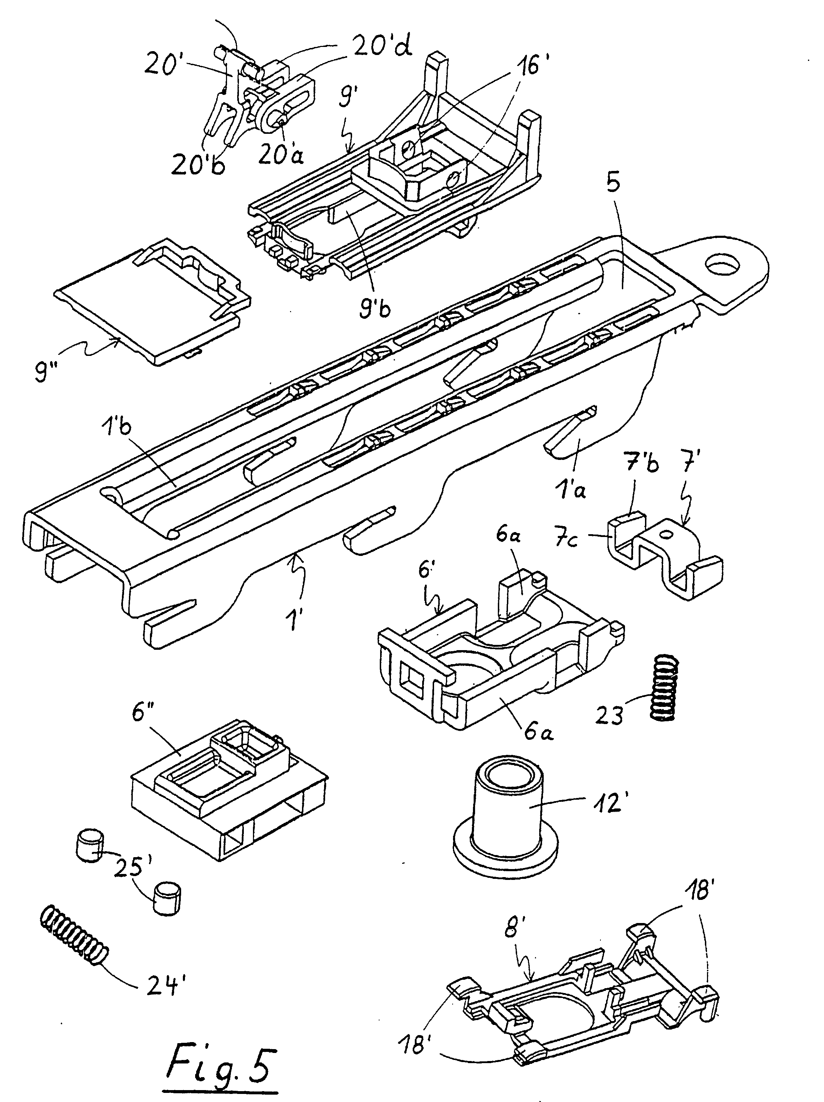

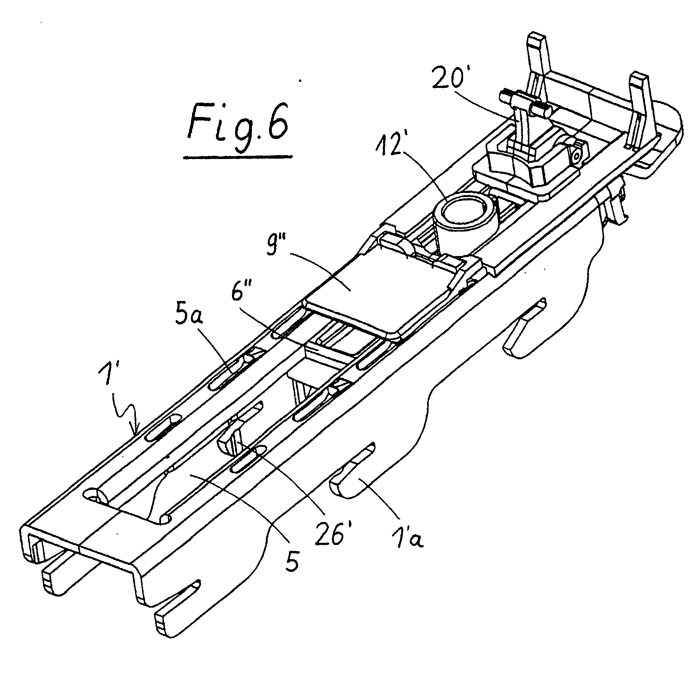

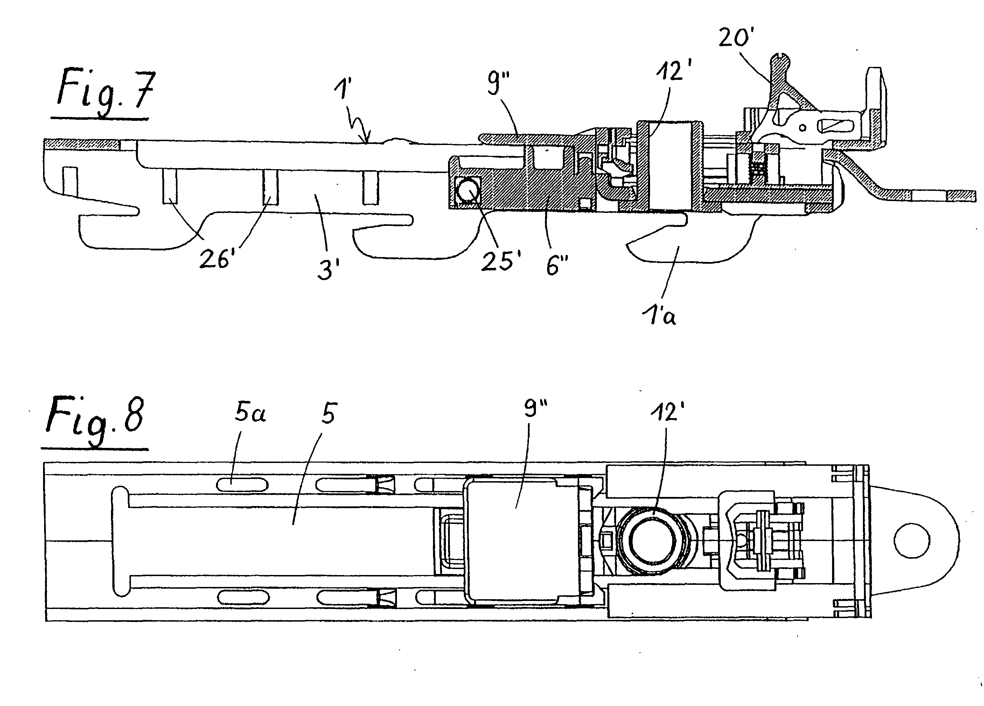

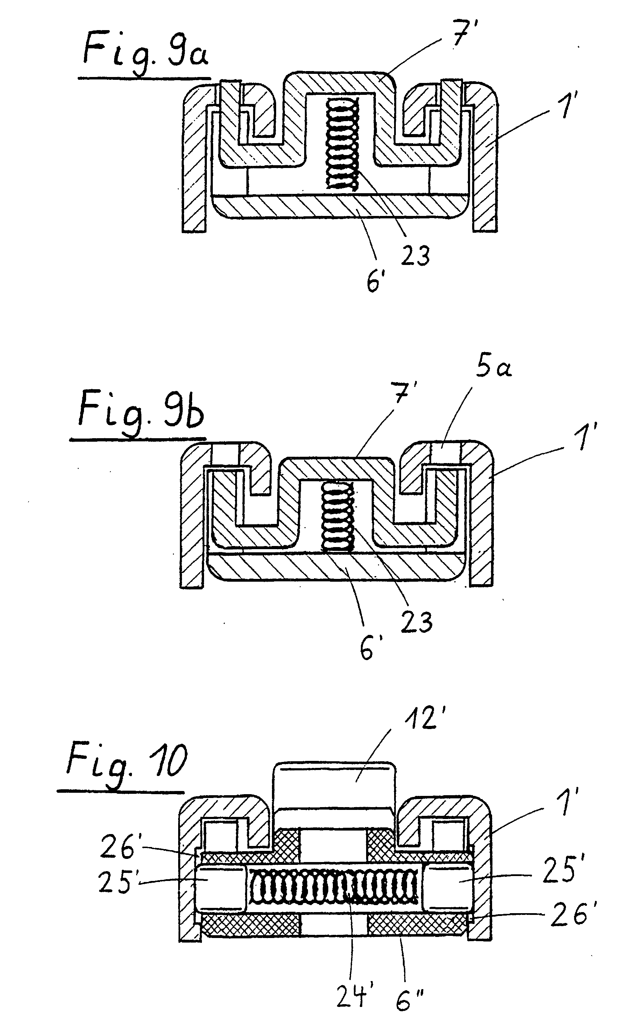

Die Fig. 5 - 10 lassen einen anderen Höhenversteller mit teils modifizierten, teils zusätzlichen Merkmalen erkennen. Er umfaßt eine Führungsschiene 1' mit Einhängehaken 1'a zur Befestigung an der sog. B-Säule von Fahrzeugen. Eine Aussparung 5 ist dabei in Längsrichtung von Führungsflächen 1'b begrenzt. Ein Verstellteil 6' ist in seinem Boden mit einer Öffnung zur Aufnahme einer Gewindebuchse 12' versehen, welche hier als lose Bundmutter ausgebildet ist. In das Verstellteil 6' ist ein Sperrteil 7' beweglich einsetzbar. Dessen Schenkel 7'b sind zur einfacheren Entriegelung leicht abgeschrägt. Ansonsten sorgt wiederum eine Druckfeder 23 dafür, daß das Sperrteil 7' in Arretierstellung gerät.

Das Verstellteil 6' ist in einen Kunststoffkäfig bzw. Schlitten 8' einsetzbar, welcher über leicht bogenförmige Gleitfedern bzw. Gleitabschnitte 18' verfügt, welche im montierten Zustand die Führungsschiene 1' an ihrer Unterseite bestreichen. Auf der Oberseite der Führungsschiene 1' findet sich dann ein Oberteil 9', welches mit dem Schlitten 8' zu verriegeln, d. h. zusammenzuclipsen ist. Sowohl der Schlitten 8' als auch das Oberteil 9' bestehen aus Kunststoff und sorgen für einen leichten und geräuscharmen Lauf des Verstellteils 6' entlang der metallenen Führungsschiene 1'. Dies umso mehr, als am Oberteil 9' auch spezielle Führungsrippen 9'b vorgesehen sind, welche mit den Führungsflächen 1'b der Führungsschiene 1' zusammenwirken.

Das Oberteil 9' weist ein Lager 16' für einen Hebel 20' auf, welcher über einen Drehpunkt 20'a, Einwirknasen 20'b und eine Angriffsachse 20'c zum Entriegeln, d. h. zum Einwirken (Eindrücken) auf das darunter befindliche Sperrteil 7' verfügt. Als Besonderheit weist jener Hebel 20' noch Anformungen 20'd auf, welche dazu bestimmt sind, Kräfte, die im Falle eines Crashs auf die Einwirknasen 20'b wirken und das Sperrteil 7' in unerwünschter Weise lösen könnten, nach Möglichkeit zu neutralisieren. Dazu ist vorgesehen, daß die Anformungen 20'd mit soviel Masse ausgestattet werden, daß sie zur anderen Seite des Drehpunktes 20'a hin ein wirksames Gegenmoment erzeugen können.

Als weitere Besonderheit weist das Verstellteil 6' noch eine zusätzliche Kammer auf, welche hier als selbständiges Element 6'' ausgebildet und mit dem Verstellteil 6' verbindbar ist. In der Verstellteil-Kammer 6'' ist quer zur Verschieberichtung des Verstellteils 6' ein durchgängiger Kanal vorgesehen, in den ein Federelement 24' samt stiftoder walzenförmiger Rastelemente 25' an ihren Enden einsetzbar sind. Jene Rastelemente 25' greifen in rillenförmige Einprägungen 26' an der Innenseite der Schenkel 3' der Führungsschiene 1' ein, welche so angeordnet sind, daß eine Vorrastung in einer möglichen Arretierstellung erfolgen kann. Die Verstellteil-Kammer 6'' ist unterhalb der Führungsschiene 1' angeordnet bzw. anzuordnen und mit einem der Führung dienenden Komplementärteil 9'' oberhalb der Führungsschiene 1' verbindbar.

Der erfindungsgemäße Höhenversteller zeichnet sich durch hohe Funktionssicherheit aus. Er gleitet gut zum Verstellen und neigt nicht zum Klappern. Dank seines Aufbaus aus verschiedenen Bestandteilen, welche im wesentlichen lösbar miteinander verbunden sind, bringt er auch gute Voraussetzungen für andere Extremsituationen mit sich, insbesondere bei einem Kopfaufprall. Dabei wirken die Verbindungsstellen gewissermaßen als Sollbruchstellen und absorbieren teilweise die Aufprallenergie, wodurch die Verletzungsgefahr gemindert wird.

### Bezugszeichenliste

- 1, 1': Führungsschiene
- 1'a: Einhängehaken
- 1'b: Führungsfläche
- 2: mittlerer Bereich
- 3, 3': Schenkel
- 4: Endstück
- 5: Aussparung
- 5a: Rastöffnung
- 6, 6': Verstellteil
- 6'': (Verstellteil-) Kammer
- 6a: Rand
- 7, 7': Sperrteil
- 7a: Bügel
- 7b, 7'b: Schenkel, Ende
- 7c: Stirnseite
- 8, 8': Kunststoffkäfig, Schlitten
- 9, 9': (Verriegelungs-) Platte, Oberteil
- 9'': Komplementärteil zur Kammer 6''
- 9a: Rastöffnung
- 9'b: Führungsrippe
- 10: Kunststoffgleiter
- 11: Führung
- 12, 12': Gewindebuchse
- 13: Rastnase
- 14: Gleitfeder
- 14a: freies Ende
- 15: Gleitfeder
- 15a: freies Ende
- 16, 16': Lager
- 17: Aussparung
- 18: Gleitfeder
- 18': Gleitabschnitt
- 19: Kanalabschnitt
- 20, 20': (Verstell-) Hebel
- 20'a: Drehpunkt
- 20'b: Einwirknase
- 20'c: Angriffsachse
- 20'd: Anformung
- 21: Pfeil
- 22: Pfeil
- 23: Druckfeder
- 24': Federelement
- 25': Rastelement
- 26': Einprägung

## Patentansprüche

1. Höhenversteller für Umlenkbeschläge von Fahrzeug-Sicherheitsgurten, bestehend aus einer mit dem Fahrzeug verbindbaren, im Querschnitt U-förmigen Führungsschiene (1, 1') mit einer länglichen Aussparung (5) im mittleren Bereich (2) und paarweise dazu angeordneten Rastöffnungen (5a), einem in der Führungsschiene (1, 1') verschiebbaren Verstellteil (6, 6') mit einer Gewindebuchse (12, 12') zur Aufnahme eines Umlenkbeschlages, einem Arretiermechanismus für das Verstellteil (6, 6') in Bezug auf die Führungsschiene (1, 1') sowie einem die Arretierwirkung aufhebenden Betätigungsglied, (20,20') wobei die Beweglichkeit des Verstellteils (6, 6') in der Führungsschiene (1, 1') auf eine Längsverschieblichkeit eingeschränkt ist, das Verstellteil (6, 6') ein dazu senkrecht bewegliches Sperrteil (7, 7') mitführt, welches die Rastöffnungen (5a) der Führungsschiene (1, 1') zur Arretierung durchsetzt, und wobei zur Aufrechterhaltung der Arretierposition am Verstellteil (6, 6') ein das Sperrteil (7, 7') in die Rastöffnungen (5a) der Führungsschiene (1, 1') zwingendes elastisches Organ vorgesehen ist, **dadurch gekennzeichnet, dass** das Sperrteil (7, 7') als etwa U-förmiger Verriegelungsbügel (7a) mit jeweils im Gegensinn U-förmig umgebogenen Schenkeln ausgebildet ist, wobei der zentrale Bereich des Bügels in die längliche Aussparung (5) und die freien Schenkele Enden (7b, 7'b) in Arretierstellung in die Rastöffnungen (5a) der Führungsschiene (1, 1') ragen.

2. Höhenversteller nach Anspruch 1 , **dadurch gekennzeichnet, dass** die inneren Schenkel des Bügels (7a) als Führungsflächen gegenüber den Begrenzungsrändem der länglichen Ausnehmung (5) in der Führungsschiene (1, 1') ausgebildet sind.

3. Höhenversteller nach Anspruch 1 oder 2, **dadurch gekennzeichnet, dass** das Verstellteil (6, 6') über hochgestellte Ränder (6a) verfügt, welche im Bereich des Sperrteils (7, 7') unterbrochen sind und mit den Stirnseiten (7c) der freien Enden (7b, 7'b) des Bügels (7a) eine Führung für den Bügel (7a) bilden.

4. Höhenversteller nach einem der Ansprüche 1-3, **dadurch gekennzeichnet, dass** das elastische Organ eine zwischen Verstellteil (6, 6') und Sperrteil (7, 7') eingespannte Druckfeder (23) ist.

5. Höhenversteller nach einem der Ansprüche 1-4, **dadurch gekennzeichnet, dass** das Verstellteil (6, 6') samt Sperrteil (7, 7') in einen schlittenartigen Kunststoffkäfig (8, 8') eingesetzt ist, welcher mit einem außen an der Führungsschiene (1, 1') anliegenden Oberteil (9, 9') nach Art einer Verriegelungsplatte geschlossen ist, wobei das Oberteil (9, 9') mit dem Kunststoffkäfig (8, 8') lösbar verbunden ist.

6. Höhenversteller, nach Anspruch 5, **dadurch gekennzeichnet, dass** der Kunststoffkäfig (8, 8') und das Oberteil (9, 9') aus Rastnasen (13) und Aussparungen (17) gebildete Clipsverbindungen aufweisen.

7. Höhenversteller nach Anspruch 5 oder 6, **dadurch gekennzeichnet, dass** die Verriegelungsplatte (9) die mit Rastöffnungen (5a) versehenen Bereiche der Führungsschiene (1) überstreicht und selbst über mindestens ein Paar deckungsgleiche Rastöffnungen (9a) verfügt, in die die freien Enden (7b) des Bügels (7a) in Arretierstellung ragen.

8. Höhenversteller nach einem der Ansprüche 5-7, **dadurch gekennzeichnet, dass** der Kunststoffkäfig (8) seitlich angeformte Gleitfedern (14, 15) aufweist, welche die Innenseite der Schenkel (3) der Führungsschiene (1) bestreichen.

9. Höhenversteller nach Anspruch 8, **dadurch gekennzeichnet, dass** die Gleitfedern (14, 15) gegenüberliegend am Kunststoffkäfig (8) angeordnet sind und über freie Enden (14a, 15a) verfügen, welche in entgegengesetzte Richtungen weisen.

10. Höhenversteller nach einem der Ansprüche 1-9, **dadurch gekennzeichnet, dass** das Betätigungsglied als Verstellhebel (20, 20') ausgebildet und am oberen Ende des Kunststoffkäfigs (8, 8') ein Lager (16, 16') für den Verstellhebel (20, 20') angeformt ist.

11. Höhenversteller nach einem der Ansprüche 1-10, **dadurch gekennzeichnet, dass** zwischen Führungsschiene (1) und Verriegelungsplatte (9) ein Kunststoffgleiter (10) angeordnet ist, welcher der Form der Verriegelungsplatte (9) weitgehend angepaßt ist.

12. Höhenversteller nach Anspruch 11, **dadurch gekennzeichnet, dass** im Bereich des Bügels (7a) zu dessen Führung ein Kanalabschnitt (19) an den Kunststoffgleiter (10) angeformt ist.

13. Höhenversteller nach Anspruch 11 oder 12, **dadurch gekennzeichnet, dass** der Kunststoffgleiter (10) über angeformte Gleitfedern (18) verfügt, welche zwischen Führungsschiene (1) und Verriegelungsplatte (9) wirksam sind.

14. Höhenversteller nach einem der Ansprüche 1-13, **dadurch gekennzeichnet, dass** die Führungsschiene (1') über Führungsflächen (1'b) entlang der Aussparung (5) verfügt und das Verstellteil (6') damit zusammenwirkende Führungsrippen (9'b) aufweist

15. Höhenversteller nach einem der Ansprüche 1-14, **dadurch gekennzeichnet, dass** das Sperrteil (7') leicht abgeschrägte Enden (7'b) besitzt.

16. Höhenversteller nach einem der Ansprüche 1-15, **dadurch gekennzeichnet, dass** das Verstellteil (6') eine als lose Bundmutter ausgebildete Gewindebuchse (12') aufweist.

17. Höhenversteller nach einem der Ansprüche 1-16, **dadurch gekennzeichnet, dass** das Verstellteil (6') eine Kammer (6") mit einem darin angeordneten Federelement (24') sowie davon betätigten Rastelementen (25') aufweist, welche in Einprägungen (26') an der Innenseite der Führungsschiene (1') zur Verrastung eingreifen.

18. Höhenversteller nach Anspruch 17, **dadurch gekennzeichnet, dass** die Kammer (6") als eigenes Bauteil ausgeführt ist, welches mit dem übrigen Verstellteil (6') lösbar zu verbinden ist.

19. Höhenversteller nach Anspruch 1-18, **dadurch gekennzeichnet, dass** der vom Verstellteil (6, 6') mitgeführte Verstellhebel (20, 20') so geformt und gewichtet ist, dass die zur einen Seite seines Drehpunktes (20'a) angeordnete Masse, welche sich im Falle eines Seitencrashs lösend auf das Sperrteil (7, 7') auswirkt, weitgehend in ihrer Wirkung über Anformungen (20'd) mit entsprechender Masse zur anderen Seite des Drehpunktes (20'a) kompensiert wird.

## Claims

1. Height adjuster for deflection fittings of vehicle seat belts, comprising a U-section guide rail (1, 1') attachable to the vehicle, with an extended slot (5) in the central region (2) and catch openings (5a) arranged in pairs thereon, an adjuster part (6, 6') displaceable in the guide rail (1, 1') with a threaded bush (12, 12') to receive a deflection fitting, a mechanism for locking the adjuster part (6, 6') with respect to the guide rail (1, 1'), and an actuating element (20, 20') releasing the locking action, wherein the freedom of movement of the adjuster part (6, 6') in the guide rail (1, 1') is restricted to a longitudinal displaceability, the adjuster part (6, 6') carries with it a latch part (7, 7') movable perpendicularly thereto which transfixes the catch openings (5a) in the guide rail (1, 1') for locking, and an elastic element urging the latch part (7, 7') into the catch openings (5a) in the guide rail (1, 1') is provided on the adjuster part (6, 6') to maintain the locked position, **characterized in that** the latch part (7, 7') is configured as an approximately U-shaped locking yoke (7a) with each arm bent back the other way in a U shape, the central region of the yoke protruding into the extended slot (5) and the free ends (7b, 7'b) of the yoke arms protruding into the catch openings (5a) in the guide rail (1, 1') when in the locked position.

2. Height adjuster according to Claim 1, **characterized In that** the inner arms of the yoke (7a) are configured as guide surfaces riding on the bounding edges of the extended slot (5) in the guide rail (1, 1').

3. Height adjuster according to Claim 1 or Claim 2, **characterized in that** the adjuster part (6, 6') has raised edges (6a) which are interrupted in the region of the latch part (7, 7') and form, with the end faces (7c) of the free ends (7b, 7'b) of the yoke (7a), a guide for the yoke (7a).

4. Height adjuster according to any one of Claims 1-3, **characterized in that** the elastic element is a compression spring (23) gripped between adjuster part (6, 6') and latch part (7, 7').

5. Height adjuster according to any one of Claims 1-4, **characterized in that** the adjuster part (6, 6') together with the latch part (7, 7') is inserted into a sled-like plastic cage (8, 8') which is closed with a top part (9, 9') in the fashion of a lock plate, externally resting on the guide rail (1, 1'), the top part (9, 9') being releasably connected to the plastic cage (8, 8').

6. Height adjuster according to Claim 5, **characterized in that** the plastic cage (8, 8') and the top part (9, 9') have clip fastenings formed by snap nebs (13) and slots (17).

7. Height adjuster according to Claim 5 or Claim 6, **characterized in that** the lock plate (9) rides over the regions of the guide rail (1) provided with catch openings (5a) and itself possesses at least one pair of congruent catch openings (9a) into which the free ends (7b) of the yoke (7a) protrude in the locked position.

8. Height adjuster according to any one of Claims 5-7, **characterized in that** the plastic cage (8) has laterally formed-on slide-springs (14,15) which ride on the inside of the arms (3) of the guide rail (1).

9. Height adjuster according to Claim 8, **characterized in that** the siide-springs (14, 15) are arranged opposite each other on the plastic cage (8) and have free ends (14a, 15a) pointing in opposite directions.

10. Height adjuster according to any one of Claims 1-9, **characterized in that** the actuating element is configured as an adjusting lever (20, 20'), and a bearing (16, 16') for the adjusting lever (20,20') is formed on the upper end of the plastic cage (8, 8').

11. Height adjuster according to any one of Claims 1-10, **characterized in that** a plastic slider (10) which largely matches the shape of the rock plate (9) is arranged between guide rail (1) and lock plate (9).

12. Height adjuster according to Claim 11, **characterized in that** a channel portion (19) is formed on the plastic slider (10) in the region of the yoke (7a) to guide the yoke.

13. Height adjuster according to Claim 11 or Claim 12, **characterized in that** the plastic slider (10) possesses formed-on springy slide-springs (18) acting between guide rail (1) and lock plate (9).

14. Height adjuster according to any one of Claims 1-13, **characterized in that** the guide rail (1) possesses guide surfaces (1'b) along the slot (5), and the adjuster part (6') has guide fins (9'b) cooperating therewith.

15. Height adjuster according to any one of Claims 1-14, **characterized in that** the latch part (7') has slightly canted ends (7'b).

16. Height adjuster according to any one of Claims 1-15, **characterized in that** the adjuster part (6') has a threaded bush (12') configured as a loose collar-nut.

17. Height adjuster according to any one of Claims 1-16, **characterized in that** the adjuster part (6') has a chamber (6") with a spring element (24') arranged therein, and latch elements (25') operated by the spring element which engage in indentations (26') on the inside of the guide rail (1') for snap locking.

18. Height adjuster according to Claim 17, **characterized in that** the chamber (6") is a separate component which is designed to be removably connected to the remainder of the adjuster part (6').

19. Height adjuster according to Claim 1-18, **characterized in that** the adjusting lever (20, 20') carried by the adjuster part (6, 6') is formed and weighted so that the mass on one side of its fulcrum (20'a) tending to release the latch part (7, 7') in the event of side crash Impact is largely compensated in its effect by formed-on bodies (20'd) of corresponding mass on the other side of the fulcrum (20'a).

## Revendications

1. Système d'ajustement en hauteur pour des ferrures de renvoi de ceinture de sécurité de véhicules, formé d'une glissière de guidage (1, 1') à section transversale en forme de U, susceptible d'être reliée au véhicule, avec un évidement (5) allongé, ménagé dans la zone centrale (2), et des ouvertures d'encliquetage (5a) disposées par paires par rapport à celles-ci, une partie de manoeuvre (6, 6') déplaçable dans la glissière de guidage (1, 1'), avec une douille filetée (12, 12') pour recevoir une ferrure de renvoi, un mécanisme de blocage pour la partie de manoeuvre (6, 6') par rapport à la glissière de guidage (1, 1'), ainsi qu'un organe d'actionnement (20, 20') annulant l'effet de blocage, la mobilité de la partie de manoeuvre (6, 6') dans la glissière de guidage (1, 1') étant limitée à une mobilité longitudinale, la partie de manoeuvre (6, 6') guidant conjointement une partie de blocage (7, 7') mobile perpendiculairement par rapport à celle-ci, qui traverse les ouvertures d'encliquetage (5a) de la glissière de guidage (1, 1') pour effectuer le blocage et, pour conserver la position de blocage sur la partie de manoeuvre (6, 6'), étant prévu un organe élastique, contraignant la partie de blocage (7, 7') à se placer dans les ouvertures d'encliquetage (5a) de la glissière de guidage (1, 1'), **caractérisé en ce que** la partie de blocage (7, 7') est réalisée sous la forme d'étrier de verrouillage (7a) à peu près en forme de U, avec des branches repliées chacune en forme de U à contre-sens, la zone centrale de l'étrier pénétrant dans l'évidement (5) allongé et les extrémités de branche (7b, 7'b) libres pénétrant dans les ouvertures d'encliquetage (5a) de la glissière de guidage (1, 1') lorsqu'on est en position de blocage.

2. Système d'ajustement en hauteur selon la revendication 1, **caractérisé en ce que** les branches intérieures de l'étrier (7a) sont configurées en faces de guidage par rapport aux bords de limitation de l'évidement (5) allongé, dans la glissière de guidage (1, 1').

3. Système d'ajustement en hauteur selon la revendication 1 ou 2, **caractérisé en ce que** la partie de manoeuvre (6, 6') a des bords (6a) relevés, interrompus dans la zone de la partie de blocage (7, 7') et formant, avec les faces frontales (7c) des extrémités libres (7b, 7'b) de l'étrier (7a), un guidage pour l'étrier (7a).

4. Système d'ajustement en hauteur selon l'une des revendications 1 à 3, **caractérisé en ce que** l'organe élastique est un ressort de compression (23), enserré entre la partie de manoeuvre (6, 6') et la partie de blocage (7, 7').

5. Système d'ajustement en hauteur selon l'une des revendications 1 à 4, **caractérisé en ce que** la partie de manoeuvre (6, 6') avec la partie de blocage (7, 7') est insérée dans une cage (8, 8') en matière synthétique du genre d'un coulisseau, qui est fermée à la façon d'une plaque de verrouillage, avec une partie supérieure (9, 9') en appui extérieurement sur la glissière de guidage (1, 1'), la partie supérieure (9, 9') étant reliée de façon désolidarisable à la cage (8, 8') en matière synthétique.

6. Système d'ajustement en hauteur selon la revendication 5, **caractérisé en ce que** la cage (8, 8') en matière synthétique et la partie supérieure (9, 9') présentent des liaisons à encliquetage, formées d'ergots d'encliquetage (13) et d'évidements (17).

7. Système d'ajustement en hauteur selon la revendication 5 ou 6, **caractérisé en ce que** la plaque de verrouillage (9) recouvre les zones, munies d'ouvertures d'encliquetage (5a), de la glissière de guidage (1) et dispose elle-même d'au moins une paire d'ouvertures d'encliquetage (9a) en coïncidence, dans lesquelles les extrémités libres (7b) de l'étrier (7a) s'engagent lorsqu'on est à la position de blocage.

8. Système d'ajustement en hauteur selon l'une des revendications 5 à 7, **caractérisé en ce que** la cage (8) en matière synthétique présente des ressorts de coulissement (14, 15) formés d'un seul tenant latéralement, couvrant la face intérieure des branches (3) de la glissière de guidage (1).

9. Système d'ajustement en hauteur selon la revendication 8, **caractérisé en ce que** les ressorts de coulissement (14, 15) sont disposés à l'opposé sur la cage (8) en matière synthétique et disposent d'extrémités libres (14a, 15a) tournées dans des directions opposées.

10. Système d'ajustement en hauteur selon l'une des revendications 1 à 9, **caractérisé en ce que** l'organe d'actionnement est réalisé sous la forme de levier de manoeuvre (20, 20') et, sur l'extrémité supérieure de la cage (8, 8') en matière synthétique, un palier (16, 16') pour le levier de manoeuvre (20, 20') est formé d'un seul tenant.

11. Système d'ajustement en hauteur selon l'une des revendications 1 à 10, **caractérisé en ce qu'**entre la glissière de guidage (1) et la plaque de verrouillage (9), est disposé un curseur (10) en matière synthétique, essentiellement adapté à la forme de la plaque de verrouillage (9).

12. Système d'ajustement en hauteur selon la revendication 11, **caractérisé en ce que**, dans la zone de l'étrier (7a), pour assurer son guidage, un tronçon de canal (19) est formé sur le curseur (10) en matière synthétique.

13. Système d'ajustement en hauteur selon la revendication 11 ou 12, **caractérisé en ce que** le curseur (10) en matière synthétique dispose de ressorts de coulissement (18) formés d'un seul tenant, agissant entre la glissière de guidage (1) et la plaque de verrouillage (9).

14. Système d'ajustement en hauteur selon l'une des revendications 1 à 13, **caractérisé en ce que** la glissière de guidage (1') dispose de faces de guidage (1'b) le long de l'évidement (5), et la partie de manoeuvre (6') présente ainsi des nervures de guidage (9'b) en coopération.

15. Système d'ajustement en hauteur selon l'une des revendications 1 à 14, **caractérisé en ce que** la partie de blocage (7') comporte des extrémités (7'b) légèrement chanfreinées.

16. Système d'ajustement en hauteur selon l'une des revendications 1 à 15, **caractérisé en ce que** la partie de manoeuvre (6') présente une douille filetée (12'), réalisée sous la forme d'un écrou à collet monté lâche.

17. Système d'ajustement en hauteur selon l'une des revendications 1 à 16, **caractérisé en ce que** la partie de manoeuvre (6') présente une chambre (6"), un élément élastique (24') y étant disposé, ainsi que des éléments d'encliquetage (25') actionnés par celui-ci, qui s'engagent dans des creusements (26'), ménagés sur la face intérieure de la glissière de guidage (1'), pour produire un encliquetage.

18. Système d'ajustement en hauteur selon la revendication 17, **caractérisé en ce que** la chambre (6") est réalisée sous la forme de composant propre, relié de façon désolidarisable au reste de la partie de manoeuvre (6').

19. Système d'ajustement en hauteur selon les revendications 1 à 18, **caractérisé en ce que** le levier de manoeuvre (20, 20'), guidé en étant entraîné par la partie de manoeuvre (6, 6'), est formé et est d'un poids tel que la masse, disposée sur un côté de son centre de rotation (20'a), qui en cas de collision latérale agit avec un effet de désolidarisation sur la partie de manoeuvre (7, 7'), a son effet largement compensé par le biais de bossages (20'd) de masse correspondante, réalisés sur l'autre côté du centre de rotation (20'a).
